# EUROPEAN PATENT SPECIFICATION

(11) **EP 1 403 482 B1**
(45) Date of publication and mention of the grant of the patent: **21.04.2010**
(21) Application number: 03019967.3
(22) Date of filing: 03.09.2003
(51) Int. Cl.: F02B 19/18, F02B 19/08, F02B 19/14

(54) **Swirl chamber used in association with a combustion chamber for diesel engines**
Brennraum mit Wirbelkammer für eine Dieselbrennkraftmaschine
Chambre de combustion du type à chambre à tourbillon pour moteur diesel

(30) Priority: 27.09.2002 JP 2002282390; 25.03.2003 JP 2003082996; 31.07.2003 JP 2003283365
(43) Date of publication of application: 31.03.2004
(73) Proprietor: Kubota Corporation, Osaka-shi, Osaka (JP)
(72) Inventor: Funaki, Koichi, Kubota Corporation, Sakai-shi, Osaka (JP); Kubo, Seishiro, Kubota Corporation, Sakai-shi, Osaka (JP)
(74) Representative: Horton, Andrew Robert Grant

(56) References cited:
- EP-A2- 0 828 065
- JP-A- 5 321 672
- JP-A- 7 097 924
- JP-A- 9 144 542
- JP-A- 11 294 168
- JP-A- 53 049 609
- JP-A- 57 056 618
- JP-A- 2001 271 646

## Description

The present invention relates generally to a combustion chamber for diesel engines, and more particularly, an improved swirl chamber used in association with a combustion chamber for diesel engines.

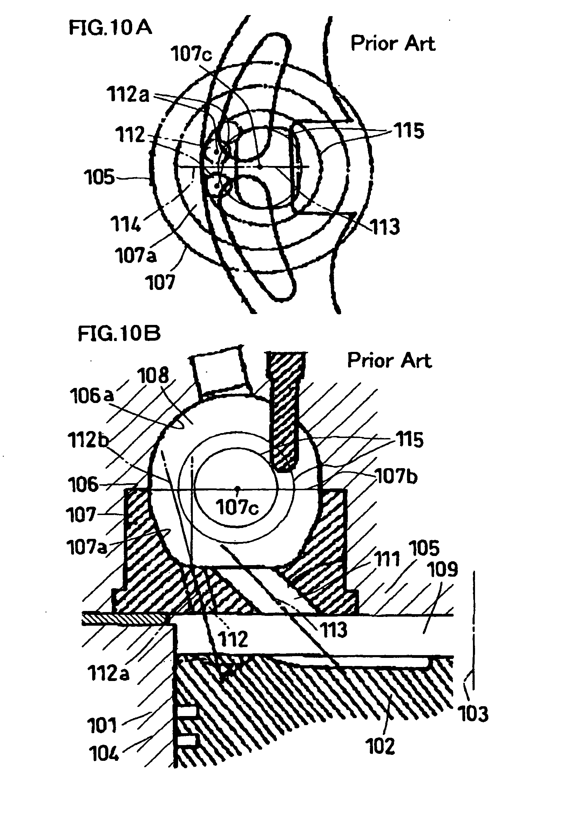

In general, diesel engines are notorious as a major source of environmental contaminants such as NOx and fumes. However, no effective measures have been accomplished for solving those problems. It is known that these problems are due to the incomplete combustion in the engine occurring because of inadequate mixing of air and fuel. To solve these problems, swirl-aided combustion systems are commonly used. One example is disclosed in JP-A-07-97924. Such a known combustion chamber fitted with a swirl chamber will be described with reference to the accompanying Figures 10A and 10B.

In Figures 10A and 10B the right-hand side (toward the central axis 103) is called 'rearward', and the left-hand side (toward the cylinder liner 104) is 'forward'. The known combustion chamber shown in Figure 10A and Figure 10B is provided with a cylinder 101 having a cylinder head 105, a reciprocating piston 102, and a combustion chamber 109. In addition, the cylinder head 105 is provided with a recess 106 in which a mouthpiece 107 is fitted. The mouthpiece 107 is provided with a top-open recess (i.e. a bowl) 107a, and the recess 106 includes a bottom-open recess (i.e. a dome) 106a. The bowl 107a and the dome 106a constitute a space 108 functioning as a swirl chamber. The swirl chamber 108 communicates with the combustion chamber 109 through a main nozzle 111 having a centre axis 113. The main nozzle 111 is forwardly inclined into the swirl chamber 108. The mouthpiece 107 is additionally provided with a pair of sub-nozzle holes 112, through which secondary air is forced into the swirl chamber 108 on a compression stroke. The sub-nozzle holes 112 are symmetrically positioned on opposite sides of the central axis 113-114 as shown in Figure 10A.

Under the construction mentioned above, however, a major disadvantage is that the secondary air ejected through the sub-nozzle holes 112 does not reach the central part of the swirl chamber 108, thereby failing to bring about effective swirls therein. In this way the conventional sub-nozzle holes 112 are not conducive to the full utilization of the secondary air.

The disadvantage mentioned above is due to the following arrangement of the sub-nozzle holes 112: Hypothetical spheres 115 are drawn about the centre 107c of the open end 107b of the bowl 107a. The inner sphere has a radius which is 50% of the radius of the open end 107b and the outer sphere has a radius which is 70% of the radius of the open end 107b (corresponding to a sphere of 100% radius). In this situation, the central axis 112a -112b of each of the sub-nozzle holes 112 passes outside the '70%' sphere 115.

Furthermore, the sub-nozzle holes 112, 112a (as viewed from above) deviate from the centre of the swirl chamber 108 so that the central axis 112a-112b of each sub-nozzle hole 112 does not intersect the 50% sphere 115.

Accordingly, an object of the present invention is to provide an improved swirl chamber capable of causing effective swirls to help air and fuel being well mixed, and dispersing the fuel well in the swirl chamber.

Another object of the present invention is to provide an improved swirl chamber capable of reducing the production of both NOx and fumes.

The document JP-57-056618-A discloses a swirl chamber for use with a combustion chamber for diesel engines, wherein the combustion chamber is defined by a piston, a cylinder, and a cylinder head, comprises a mouthpiece fitted in a hole of the cylinder head, the hole having a bottom-open recess, and the mouthpiece including a top-open recess, the bottom-open recess and the top-open recess defining the swirl chamber; a main nozzle hole through a base wall of the mouthpiece to effect communication between the combustion chamber and the swirl chamber, the main nozzle hole having a forward inclination into the swirl chamber; and a pair of sub-nozzle holes positioned on opposite sides of the central axis of the main nozzle hole; wherein each of the sub-nozzle holes, which are separated from the main nozzle hole, has a central axis which intersects a hypothetical sphere concentric with the top-open recess and having a radius of 70% or less of the radius of the top-open recess.

The invention is characterised relative to that document in that the main nozzle hole is provided with a main groove and two side grooves adjacent the main groove; and the open ends of the sub-nozzle holes are spaced away from the main nozzle hole and arranged forwards of the side grooves in the base wall of the mouthpiece.

The document JP-2001-271646-A discloses a main nozzle hole which is provided with a main groove and two side grooves adjacent the main groove; in that document the sub-nozzle holes intersect the main groove.

### Brief Description of the Drawings

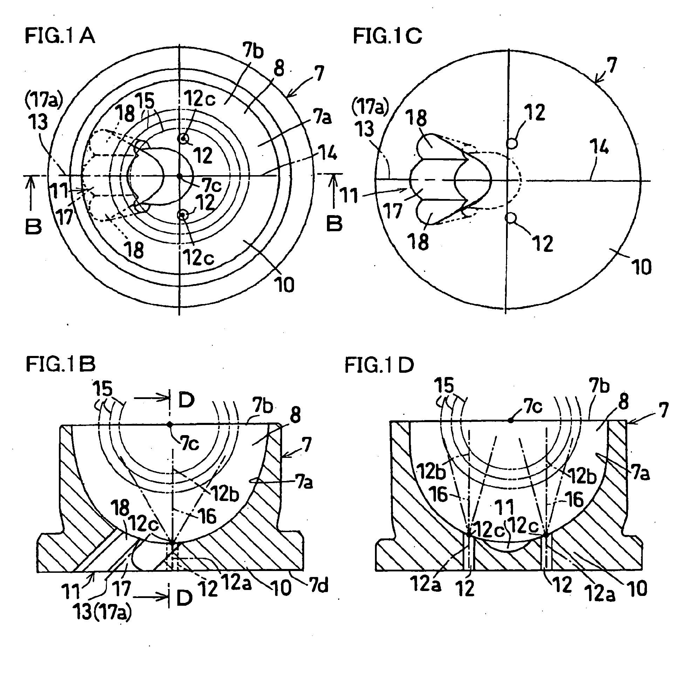

Figure 1 is generally a diagrammatic view exemplifying a first embodiment of the present invention; Figure 1A being a plan view, Figure 1B being a cross-sectional view taken along the line B-B of Figure 1A, Figure 1C being a bottom view, and Figure 1D being a cross-sectional view taken along the line D-D of Figure 1B.

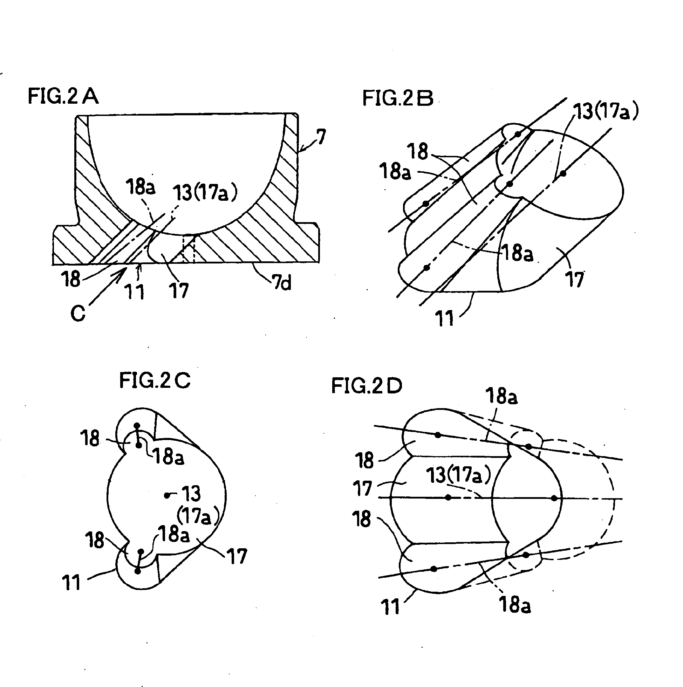

Figure 2 is generally a diagrammatic view exemplifying the nozzle hole is the mouthpiece shown in Figure I, Figure 2A being a vertical cross-sectional side view of the mouthpiece, Figure 2B being a perspective view of the nozzle hole, Figure 2C being a diagrammatic view of the nozzle hole viewed in the direction indicated by the arrow C in Figure 2A, and Figure 2D being a bottom view of the nozzle hole.

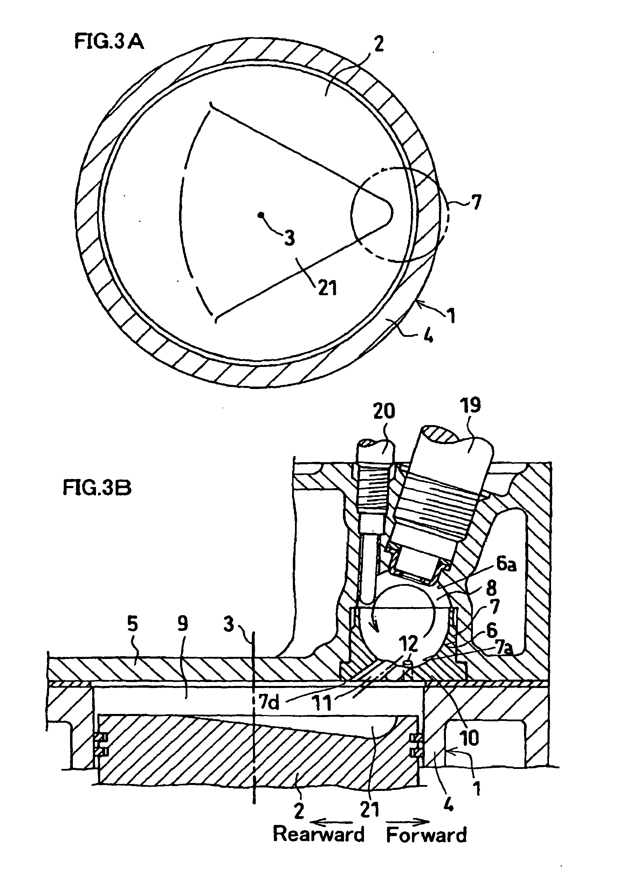

Figure 3 is generally a diagrammatic view exemplifying the swirl chamber shown in Figure 1; Figure 3A being a horizontal cross-sectional plan view of a cylinder incorporating a piston; and Figure 3B being a cross-sectional side view of the swirl chamber and the surrounding part members.

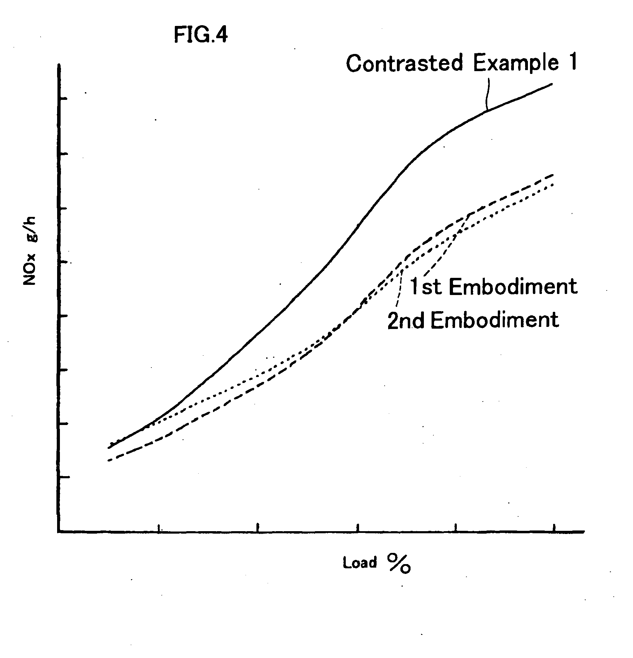

Figure 4 is a graph showing NOx content in the exhaust gases under the first embodiment shown in Figure 3, in comparison with a contrasted example 1 having no sub-nozzle holes.

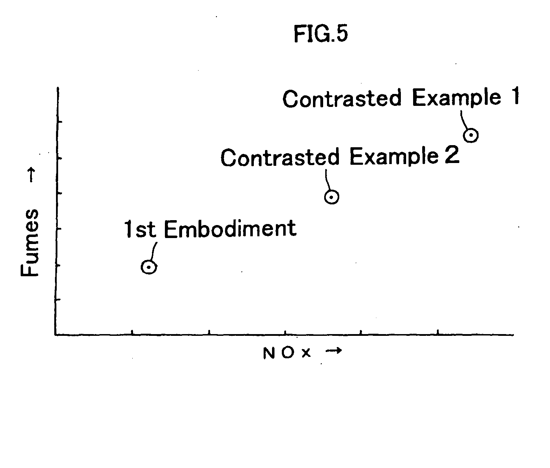

Figure 5 is a graph showing the amount of NOx and fumes exhausted under the first embodiment shown in Figure 3, in comparison with contrasted examples 1 and 2.

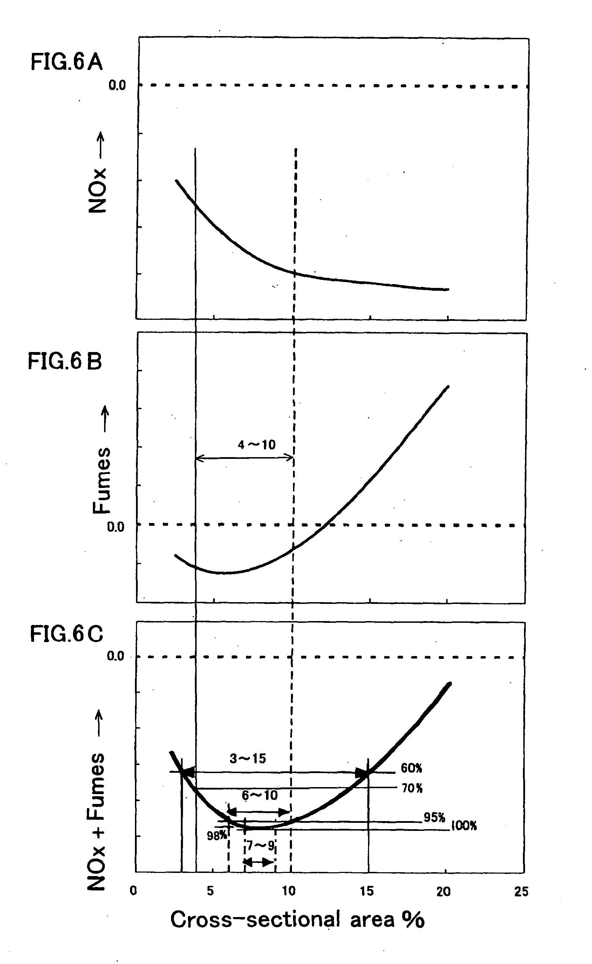

Figure 6 is generally a graph showing the relationship between the cross-sectional area of the sub-nozzle holes and the characteristics of gases exhausted from the swirl chamber of Figure 3, Figure 6A showing variations in the amount of NOx in relation to the cross-sectional area, and Figure 6C showing variations in the total amount of NOx and fumes in relation to the cross-sectional area.

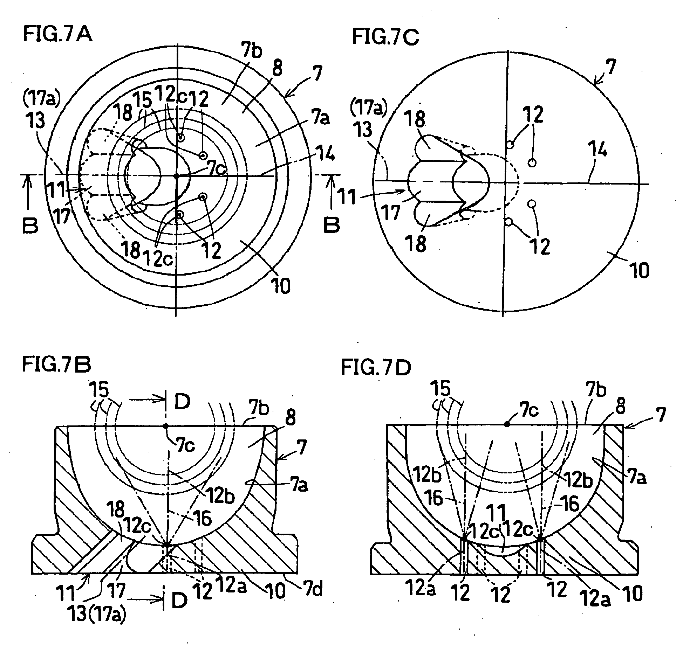

Figure 7 is generally a diagrammatic view exemplifying the mouthpiece of a second embodiment; Figure 7A being a plan view, Figure 7B being a cross-sectional view taken along the line B-B in Figure 7A, Figure 7C being a bottom view, and Figure 7D being a cross-sectional view taken along the line D-D in Figure 7B.

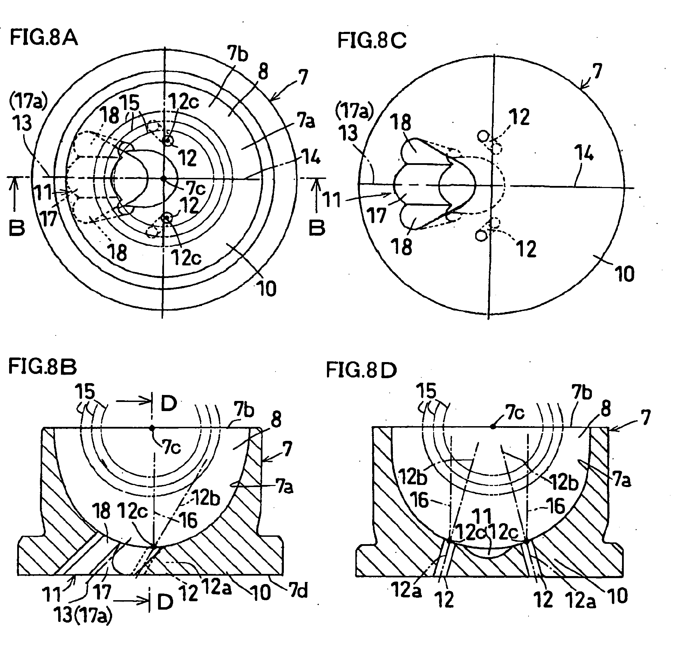

Figure 8 is generally a diagrammatic view exemplifying the mouthpiece of a third embodiment, Figure 8A being a plan view, Figure 8B being a cross-sectional view taken along the line B-B in Figure 8A, Figure 8C being a bottom view, and Figure 8D being a cross-sectional view taken along the line D-D in Figure 8B.

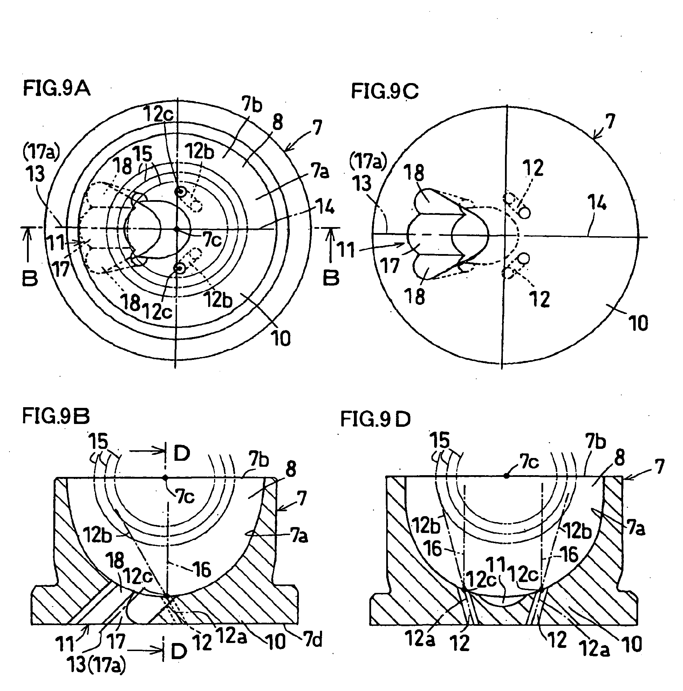

Figure 9 is generally a diagrammatic view exemplifying the mouthpiece of a fourth embodiment; Figure 9A being a plan view, Figure 9B being a cross-sectional view taken along the line B-B in Figure 9A, Figure 9C being a bottom view, and Figure 9D being a cross-sectional view taken along the line D-D in Figure 9B: and

Figure 10 is generally a diagrammatic view exemplifying a known swirl chamber, Figure 10A being a plan view of the mouthpiece and the piston, and Figure 10B being a vertical cross-sectional side view of a swirl chamber and surrounding part members.

### Description of Preferred Embodiments

In Figures 1B, 3B, 7B, 8B and 2A the right-hand side is 'forward', this being in the same sense as the forward direction of the main nozzle hole. A first embodiment is shown in Figures 1 to 6, in which a pair of sub-nozzle holes 12 are provided upright in parallel with the central axis 3 of a cylinder 1. The second embodiment shown in Figure 7 is similar, but in the third embodiment shown in Figure 8 and a fourth embodiment shown in Figure 9 the sub-nozzle holes 12 slightly converge and slightly diverge toward their top open ends, respectively. The feature common to all the embodiments is that the sub-nozzle holes are spaced from, and positioned symmetrically on opposite sides of, the main nozzle. In addition, the sub-nozzle holes are disposed on the 'forward' side.

In Figure 3B a reciprocating piston 2 is provided inside a cylinder 1 along whose central axis 3 the piston 2 moves up and down. The cylinder 1 has a head 5 having a recess 6 in which a mouthpiece 7 is fitted. The recess 6 includes a bottom-open recess 6a, and the mouthpiece 7 includes a top-open recess 7a. The bottom-open recess 6a and the top-open recess 7a constitute a space 8 that is utilized as a swirl chamber. The cylinder 1 is provided with a combustion chamber 9 having a main nozzle hole 11 passing through the mouthpiece 7. The combustion chamber 9 and the swirl chamber 8 communicate with each other through the main nozzle hole 11, which is forwardly inclined toward the swirl chamber 8 from the combustion chamber 9, as shown in Figure 3B. The mouthpiece 7 has an undersurface 7d in a plane at right angles to the central axis 3 of the cylinder 1.

As best shown in Figure 3B, a fuel jet nozzle 19 and a heat plug 20 protrude into the swirl chamber 8. The piston 2 is provided with a triangular recess 21 adapted to guide a gas flow. The root portion of the recess 21 is adapted to guide a gas flow, and is positioned immediately below the main nozzle hole 11. The recess 21 widens and diminishes in depth progressively away from the main nozzle hole 11.

The principle underlying the combustion chamber 9 fixed with the swirl chamber 8 is as follows:
On the compression stroke the piston 2 rises, thereby introducing compressed air into the swirl chamber 8 to cause swirls therein. When the piston 2 reaches the top dead point, fuel is ejected through the ejection nozzle 19. The fuel is mixed with the air in the swirl chamber 8, and as a result, it expands in volume. The expanded gases pass into the combustion chamber 9 through the main nozzle hole 1. The fresh charge expands and rises as it goes away from the main nozzle hole 11 in the triangular recess 21. The fuel-content in the fresh charge mixes with the air in the combustion chamber 9, and the mixture is ignited and burned.

As shown in Figures 1A to 1D, and particularly in Figures 1B and 1D, the sub-nozzle holes 12 are provided in pairs through a base wall 10 of the mouthpiece 7. Each of the sub-nozzle holes 12 is spaced from the main nozzle hole 11 such that they are symmetrically positioned about the central axis 13 of the main nozzle hole 11 or about its extension 14, depending upon the shape of the main nozzle hole 11.

Figures 1A, 1B, and 1D show a hypothetical sphere 15 about a centre 7c which is the centre of the open end 7b of the top-open recess 7a. The radius of the open end 7b is supposed to be 100%, and that of the sphere 15 to be 50%. Each of the sub-nozzle holes 12 is positioned such that its central axis 12a-12b intersects the sphere 15.

The radius of the sphere 15 which is thereby intersected may be 70%, but is more preferably 60%, and most preferably 50% of the radius of the open end 7b. In Figures 1A, 1B, and 1D the innermost, middle, and outermost spheres 15 correspond to 50%, 60% and 70% respectively of the radius of the open end 7b. It has been demonstrated that this range of angular positioning of the sub-nozzle holes 12 enables secondary air to gather at the centre of the swirl chamber 8, thereby making the most of the air ejected through the sub-nozzle holes 12 and causing effective swirls in the swirl chamber 8.

Figure 1A shows, as a preferred embodiment, that the centre 12c of the upper open end of each sub-nozzle hole 12 overlap, as seen from above, the circle 15 having a radius of 50%, whereby the central axis 12a-12b of each sub-nozzle hole 12 passes through the middle of the swirl chamber 8.

In Figures 1B and 1D are shown hypothetical reference lines 16 each of which, as may be seen, is parallel to the central axis 3 of the cylinder 1. Each sub-nozzle hole 12 is positioned such that its central axis 12a-12b exactly coincides with a respective one of the reference lines 16.

In this way the sub-nozzle holes 12 are positioned at various angles relative to the respective reference line 16 (Figures 1B and 1D). If a sub-nozzle hole is positioned at a relatively small angle to the respective reference line 16, the sub-nozzle hole 12 can be short in length, thereby reducing frictional resistance to the flow of secondary air passing through the sub-nozzle hole. In Figure 1B, wherein the cross-section of the mouthpiece 7 is viewed from the side, and the two sub-nozzle holes 12 appear to be in alignment, the central axis 12a-12b of each sub-nozzle hole 12 is inclined at a first angle to the reference line 16. In Figure 1D, wherein the cross-section of the mouthpiece 7 is viewed from the back, and the sub-nozzle holes appear to be arranged side by side, each central axis 12a-12b is inclined at a second angle to the reference line 16. The first angle may be 30° or less and the second angle may be 15° or less. The first angle may be 15° or less and the second angle may be 8° or less. The first angle may be 8°and the second angle may be 4° or less. The first angle may be 4° or less and the second angle may be 2° or less.

In the embodiment illustrated in Figures 1B and 1C the first angle is 30° and the second angle is 15°, each angular relation is indicated by chain lines.
The size of each sub-nozzle hole 12 is determined as follows:

It has been demonstrated that if the main nozzle hole 11 has an open end of which the effective area is supposed to be 100%, the total area of the open ends of the two sub-nozzle holes should be in the range of 3% to 15%; preferably 4 to 10%; more preferably 6 to 10%, and most preferably 7 to 9%. In short, the range of 3 to 15%, or preferably the range of 5 to 15% is effective to reduce the production of NOx and fumes evenly.

Referring to Figures 2A to 2D, the main nozzle hole 11 includes a main groove 17 and a pair of side grooves 18 communicatively continuous to the main groove 17 through banks (not numbered). In Figure 2A, each side groove 18 is formed such that its central axis 18a is slightly behind the central axis 17a of the main groove 17. Each side groove 18 is also arranged that its angle of elevation is smaller than 45° of the axis 17a.

As best shown in Figure 1A, each of the side grooves 18 gradually but slightly narrows toward the swirl chamber while the main groove 17 remains the same in width along its full length.

Referring to Figures 4 and 5, the major advantage of the first embodiment is that environmental contaminants such as NOx and fumes are reduced in the exhaust gases, which will be demonstrated, on condition that the applied load is the same.

From Figure 4, it will be understood that the first embodiment has less nitrogen oxides (NOx) than a contrasted example (1) that has neither sub-nozzle holes 12 nor the side grooves 18. It will be appreciated that the sub-nozzle holes 12 and the side grooves 18 are effective to reduce NOx content.

Figure 5 shows that the first embodiment has less NOx and less fumes than contrasted examples 1 and 2, wherein the contrasted example 2 has sub-nozzle holes corresponding to the sub-nozzle holes 12 but no grooves corresponding to the side grooves 18. The comparison between the contrasted examples 1 and 2 shows that the addition of the secondary air sub-nozzle holes 12 is conducive to the reduction of NOx and fumes. Likewise, the comparison between the first embodiment and the contrasted example 2 shows that the side grooves 18 are conducive to the reduction of NOx and fumes.

The efficacy with which exhaust gases are reduced depends upon the area of the open end of the sub-nozzle holes 12. Referring to Figure 6A to 6C, each horizontal co-ordinate represents the total minimum area of the open ends of the sub-nozzle holes 12 as a percentage fraction of the area of the open end of the main nozzle hole 11. The vertical co-ordinate of Figure 6A indicates variations in the amount of NOx; in Figure 6B the vertical co-ordinate indicates variations in the amount of fumes, and in Figure 6C the vertical co-ordinate indicates variations in the amount of NOx and fumes. Each coefficient of variation is calculated, as a reference value, based upon the amount of NOx and fumes produced in the combustion chamber having no sub-nozzle holes 12. Let the reference value be α, and the amount of variation be β Then, the coefficient of variation will be (β-α)/α.

As shown in Figure 6C, the reduction rate is maximised when the area of the open end of the sub-nozzle holes 12 is 7.7%. Let the value of the reduction rate at this stage be regarded as 100%. It has been demonstrated that to increase the rate of reduction of exhaust gases up to 98%, the total area of the open ends of the sub-nozzle hole 12 must be in the range of 7 to 9%, and if it is in the range of 95% to 98%, the total area can be in the range of 6 to 10%. If it is in the range of 60% to 95%, the total area can be in the range of 3 to 15%. When the reduction rate exceeds 70% of the maximum, and both NOx and fumes decrease as shown in Figures 6A and 6B the total area is in the range of 4 to 10%. As a result, it will be concluded that the total area of the open ends of the sub-nozzle holes is preferably in the range of 3 to 15%, more preferably, 4 to 10%, further preferably, 6 to 10% and most preferably, 7 to 9% of the area of the open end of the main nozzle hole 11.

Referring to Figures 7, 8 and 9, a second embodiment, a third embodiment and a fourth embodiment will be described, respectively.

In the second embodiment, shown in Figure 7 the total area of the open ends of the sub-nozzle holes 12 is 8% of the area (100%) of the open end of the main nozzle hole 11, wherein each sub-nozzle hole has an open end having the same area. This embodiment reduces the production of NOx or fumes or both, as clearly demonstrated by comparison with the contrasted examples 1 and 2.

In the third embodiment shown in Figure 8 the pair of sub-nozzle holes 12 are inclined so that they slightly converge in the direction toward the swirl chamber 8 from the combustion chamber 9, in contrast to the first and second embodiments wherein they extend upright between the combustion chamber 9 and the swirl chamber 8. In Figure 8B the angle of convergence is 30° and in Figure 8D, the angle of convergence is 15°.

In the fourth embodiment shown in Figure 9A to 9D, the pair of sub-nozzle holes 12 are inclined so that they slightly diverge in the direction toward the swirl chamber 8 from the combustion chamber 9. In Figure 9B the angle of divergence is 30° and in Figure 9D, the angle of divergence is 15°.

## Claims

1. A swirl chamber (8) for use with a combustion chamber (9) for diesel engines, wherein the combustion chamber (9) is defined by a piston (2), a cylinder (1), and a cylinder head (5), the swirl chamber (8) comprising:
a mouthpiece (7) fitted in a hole (6) of the cylinder head (5), the hole having a bottom-open recess (6a), and the mouthpiece (7) including a top-open recess (7a) having an open end (7b), the bottom-open recess (6a) and the top-open recess (7a) defining the swirl chamber (8);
a main nozzle hole (11) through a base wall (10) of the mouthpiece to effect communication between the combustion chamber (9) and the swirl chamber (8), the main nozzle hole (11) having a forward inclination, i.e. an inclination from the combustion chamber (9) towards the cylinder head (5) and radially outwards with respect to the cylinder's central axis (3), into the swirl chamber (8); and
a pair of sub-nozzle holes (12) positioned on opposite sides of the central axis (13) of the main nozzle hole (11);
wherein each of the sub-nozzle holes (12), which are separated from the main nozzle hole (11), has a central axis (12a, 12b) which intersects hypothetical sphere (15) concentric with the centre (7c) of the open end (7b) of the top-open recess (7a) and having a radius of 70% or less of the radius of the open end (7b) of the top-open recess;
**characterised in that** the main nozzle hole (11) is provided with a main groove (17) and two side grooves (18) adjacent and communicatively continuous to the main groove (17); and the open ends of the sub-nozzle holes (12) are spaced away from the main nozzle hole (11) and positioned forwards, i.e. radially outwards with respect to the cylinder's central axis (3), of the side grooves (18) in the base wall of the mouthpiece (7).

2. A swirl chamber according to claim 1, wherein the radius of the sphere is 60% or less of the radius of the top-open recess (7a)

3. A swirl chamber according to claim 2, wherein the sphere (15) has a radius of 50% of the radius of the top-open recess (7a).

4. A swirl chamber according to any of claims 1 - 3 wherein each of the sub-nozzle holes is positioned such that its central axis (12a, 12b) is inclined at an angle between 0° and 30° away from a reference line (16) parallel to the central axis (3) of the cylinder (1).

5. A swirl chamber according to claim 4 wherein the angle is 0° to 15°.

6. A swirl chamber according to any of claims 1 - 3 wherein the sub-nozzle holes (12) are positioned such that their central axes (12a, 12b) are upright on the base wall of the mouthpiece.

7. A swirl chamber according to any of claims 1 - 3 wherein the sub-nozzle holes (12) are positioned such that the distance between them becomes narrower toward their top open ends.

8. A swirl chamber according to any of claims 1 - 3 wherein the sub-nozzle holes (12) are positioned such that the distance between them becomes wider toward their top open ends.

9. A swirl chamber according to any foregoing claim, wherein the total area of the open ends of the sub-nozzle holes (12) is in the range between 3% and 15% of that of the main nozzle hole (11).

10. A swirl chamber according to claim 9 wherein the said total area is between 4% and 10% of that of the main nozzle hole (11).

11. A swirl chamber according to any foregoing claim wherein the side grooves (18) are positioned such that their central axes are slightly behind that of the main groove (17), i.e. slightly nearer the cylinder's central axis (3).

12. A swirl chamber according to any foregoing wherein each of the side grooves (18) has its central axis inclined at a smaller angle than the angle at which the central axis of the main groove (17) is inclined with respect to the level of a base wall of the mouthpiece (7).

13. A swirl chamber according to any foregoing claim, wherein each of the side grooves (18) narrows toward its forward end.

## Patentansprüche

1. Wirbelkammer (8) zur Verwendung mit einer Brennkammer (9) für Dieselmotoren, wobei die Brennkammer (9) durch einen Kolben (2), einen Zylinder (1) und einen Zylinderkopf (5) begrenzt ist, wobei die Wirbelkammer (8) aufweist:
ein Mundstück (7), das in ein Loch (6) des Zylinderkopfs (5) eingesetzt ist, wobei das Loch eine Aussparung (6a) mit offenem Boden aufweist und das Mundstück (7) eine Aussparung (7a) mit offener Oberseite aufweist, die ein offenes Ende (7b) aufweist, wobei die Aussparung (6a) mit offenem Boden und die Aussparung (7a) mit offener Oberseite die Wirbelkammer (8) bestimmen;
ein durch eine Basiswand (10) des Mundstücks verlaufendes Hauptdüsenloch (11) zum Bewirken einer Verbindung zwischen der Brennkammer (9) und der Wirbelkammer (8), wobei das Hauptdüsenloch (11) eine Vorwärtsneigung, d.h. eine Neigung von der Brennkammer (9) in Richtung des Zylinderkopfs (5) und in Bezug auf die Mittelachse (3) des Zylinders radial auswärts, in die Wirbelkammer (8) aufweist; und
ein Paar von Nebendüsenlöchern (12), die auf entgegengesetzten Seiten der Mittelachse (13) des Hauptdüsenlochs (11) angeordnet sind;
wobei jedes der vom Hauptdüsenloch (11) getrennten Nebendüsenlöcher (12) eine Mittelachse (12a, 12b) aufweist, die eine hypothetische Kugel (15) schneidet, die zum Zentrum (7c) des offenen Endes (7b) der Aussparung (7a) mit offener Oberseite konzentrisch ist und einen Radius von 70 % oder weniger des Radius des offenen Endes (7b) der Aussparung mit offener Oberseite aufweist;
**dadurch gekennzeichnet, dass** das Hauptdüsenloch (11) mit einer Hauptnut (17) und zwei Seitennuten (18), die zur Hauptnut (17) benachbart und verbindungsdurchgängig sind, versehen ist; und die offenen Enden der Nebendüsenlöcher (12) vom Hauptdüsenloch (11) beabstandet und vor den Seitennuten (18) in der Basiswand des Mundstücks (7), d.h. radial auswärts in Bezug auf die Mittelachse (3) des Zylinders, angeordnet sind.

2. Wirbelkammer nach Anspruch 1, wobei der Radius der Kugel 60 % oder weniger des Radius der Aussparung (7a) mit offener Oberseite ist.

3. Wirbelkammer nach Anspruch 2, wobei die Kugel (15) einen Radius von 50 % des Radius der Aussparung (7a) mit offener Oberseite aufweist.

4. Wirbelkammer nach einem der Ansprüche 1 - 3, wobei jedes der Nebendüsenlöcher derart angeordnet ist, dass seine Mittelachse (12a, 12b) in einem Winkel zwischen 0° und 30° von einer Bezugslinie (16) weg geneigt ist, die zur Mittelachse (3) des Zylinders (1) parallel ist.

5. Wirbelkammer nach Anspruch 4, wobei der Winkel 0° bis 15° ist.

6. Wirbelkammer nach einem der Ansprüche 1- 3, wobei die Nebendüsenlöcher (12) derart angeordnet sind, dass ihre Mittelachsen (12a, 12b) an der Basiswand des Mundstücks senkrecht sind.

7. Wirbelkammer nach einem der Ansprüche 1- 3, wobei die Nebendüsenlöcher (12) derart angeordnet sind, dass der Abstand zwischen ihnen in Richtung ihrer oberen offenen Enden enger wird.

8. Wirbelkammer nach einem der Ansprüche 1 - 3, wobei die Nebendüsenlöcher (12) derart angeordnet sind, dass der Abstand zwischen ihnen in Richtung ihrer oberen offenen Enden weiter wird.

9. Wirbelkammer nach einem vorangehenden Anspruch, wobei die Gesamtfläche der offenen Enden der Nebendüsenlöcher (12) im Bereich zwischen 3 % und 15 % von jener des Hauptdüsenlochs (11) liegt.

10. Wirbelkammer nach Anspruch 9, wobei die Gesamtfläche zwischen 4 % und 10 % von jener des Hauptdüsenlochs (11) liegt.

11. Wirbelkammer nach einem vorangehenden Anspruch, wobei die Seitennuten (18) derart angeordnet sind, dass ihre Mittelachsen geringfügig hinter jener der Hauptnut (17), d.h. geringfügig näher an der Mittelachse (3) des Zylinders, liegen.

12. Wirbelkammer nach einem vorangehenden Anspruch, wobei die Mittelachse von jeder der Seitennuten (18) in einem kleineren Winkel geneigt ist als dem Winkel, in dem die Mittelachse der Hauptnut (17) in Bezug auf das Niveau einer Basiswand des Mundstücks (7) geneigt ist.

13. Wirbelkammer nach einem vorangehenden Anspruch, wobei sich jede der Seitennuten (18) in Richtung ihres Vorderendes verschmälert.

## Revendications

1. Chambre de tourbillonnement (8) utilisée avec une chambre de combustion (9) pour moteurs diesel, dans laquelle la chambre de combustion (9) est définie par un piston (2), un cylindre (1) et une tête cylindrique (5), cette chambre de tourbillonnement (8) comprenant :
une embouchure (7) placée dans un trou (6) de la tête (5) de cylindre, ce trou comportant un évidement (6a) à ouverture inférieure, et l'embouchure comprenant un évidement (7a) à ouverture supérieure comportant une extrémité ouverte (7b), l'évidement (6a) à ouverture inférieure et l'évidement (7a) à ouverture supérieure définissant la chambre de tourbillonnement (8) ;
un trou principal (11) de tuyère traversant une paroi (10) de base de l'embouchure, afin de produire une communication entre la chambre de combustion (9) et la chambre de tourbillonnement (8), le trou principal (11) de tuyère présentant une inclinaison vers l'avant, c'est-à-dire une inclinaison partant de la chambre de combustion (9) vers la tête (5) de cylindre et radialement vers l'extérieur par rapport à l'axe central (3) du cylindre, dans la chambre de tourbillonnement (8) ; et
une paire de trous (12) de sous-tuyère placés sur des côtés opposés de l'axe central (13) du trou principal (11) de tuyère ;
dans laquelle chacun des trous (12) de sous-tuyère, qui sont séparés du trou principal (11) de tuyère, comporte un axe central (12a, 12b) qui coupe la sphère hypothétique (15) concentrique avec le centre (7c) de l'extrémité ouverte (7b) de l'évidement (7a) à ouverture supérieure, et dont le rayon vaut au plus 70 % de celui de l'extrémité ouverte (7b) de l'évidement (7a) à ouverture supérieure ;
**caractérisée en ce que** le trou principal (11) de tuyère est doté d'une rainure principale (17) et de deux rainures latérales (18) adjacentes et continues avec communication avec la rainure principale (17) ; et que les extrémités ouvertes des trous (12) de sous-tuyère sont espacées du trou principal (11) de tuyère et placées en avant, c'est-à-dire vers l'extérieur par rapport à l'axe central (3) du cylindre, aux rainures latérales (18) présentes dans la paroi de base de l'embouchure (7).

2. Chambre de tourbillonnement selon la revendication 1, dans laquelle le rayon de la sphère vaut au maximum 60 % du rayon de l'évidement (7a) à ouverture supérieure.

3. Chambre de tourbillonnement selon la revendication 2, dans laquelle la sphère (15) a un rayon dont la valeur correspond à 50 % de celui de l'évidement (7a) à ouverture supérieure.

4. Chambre de tourbillonnement selon l'une quelconque des revendications 1 à 3, dans laquelle chacun des trous de sous-tuyère rest placé de sorte que son axe central (12a, 12b) est incliné selon un angle compris entre 0 et 30° par rapport à une ligne (16) de référence parallèle à l'axe central (3) du cylindre (1).

5. Chambre de tourbillonnement selon la revendication 4, dans laquelle l'angle est compris entre 0 et 15°.

6. Chambre de tourbillonnement selon l'une quelconque des revendications 1 à 3, dans laquelle les trous (12) de sous-tuyère sont positionnés de sorte que leurs axes centraux (12a, 12b) sont redressés sur la paroi de base de l'embouchure.

7. Chambre de tourbillonnement selon l'une quelconque des revendications 1 à 3, dans laquelle les trous (12) de sous-tuyère sont positionnés de sorte que la distance les séparant se réduit vers leurs extrémités supérieures ouvertes.

8. Chambre de tourbillonnement selon l'une quelconque des revendications 1 à 3, dans laquelle les trous (12) de sous-tuyère sont positionnés de sorte que la distance les séparant s'agrandit vers leurs extrémités supérieures ouvertes.

9. Chambre de tourbillonnement selon l'une quelconque des revendications précédentes, dans laquelle la surface totale des extrémités ouvertes des trous (12) de sous-tuyère est comprise entre 3 et 15 % de celle du trou principal (11) de tuyère.

10. Chambre de tourbillonnement selon la revendication 9, dans laquelle ladite surface totale est comprise entre 4 et 10 % par rapport à celle du trou principal (11) de tuyère.

11. Chambre de tourbillonnement selon l'une quelconque des revendications précédentes, dans laquelle les rainures latérales (18) sont positionnées de sorte que leurs axes centraux sont légèrement derrière ceux de la rainure principale (17), c'est-à-dire légèrement plus près de l'axe central (3) du cylindre.

12. Chambre de tourbillonnement selon l'une quelconque des revendications précédentes, dans laquelle chacune des rainures latérales (18) comporte un axe central incliné d'un angle plus petit que celui dont l'axe central de la rainure principale (17) est incliné par rapport au niveau d'une paroi de base de l'embouchure (7).

13. Chambre de tourbillonnement selon l'une quelconque des revendications précédentes, dans laquelle chacune des rainures latérales (18) se réduit vers son extrémité avant.
